# FASCICULE DE BREVET EUROPEEN

(11) **EP 1 950 497 B1**
(45) Date de publication et mention de la délivrance du brevet: **25.10.2017**
(21) Numéro de dépôt: 08100730.4
(22) Date de dépôt: 22.01.2008
(51) Int. Cl.: F23R 3/04, F23R 3/26, F23R 3/50, F02C 3/14

(54) **CHAMBRE DE DIFFUSION POUR MOTEUR À TURBINE À GAZ, CHAMBRE DE COMBUSTION ET MOTEUR À TURBINE À GAZ LES COMPORTANT**
VERTEILERKAMMER FÜR GASTURBINENMOTOR, BRENNKAMMER UND GASTURBINENMOTOR, DER DIESE UMFASST
DIFFUSION CHAMBER FOR GAS TURBINE ENGINE, COMBUSTION CHAMBER AND GAS TURBINE ENGINE COMPRISING SAME

(30) Priorité: 23.01.2007 FR 0700453
(43) Date de publication de la demande: 30.07.2008
(73) Titulaire: Safran Aircraft Engines, 75015 Paris (FR)
(72) Inventeur: COMMARET, Patrice, 77950, RUBELLES (FR); DESAULTY, Michel, 77170, VERT ST DENIS (FR); LUNEL, Romain, 77170, BRIE COMTE ROBERT (FR); SANDELIS, Denis, 77370, NANGIS (FR)
(74) Mandataire: Gevers & Orès

(56) Documents cités:
- EP-A1- 1 265 037
- EP-A1- 1 898 155
- EP-A2- 1 431 664
- WO-A-2005/036057
- FR-A- 2 133 832
- US-A- 4 462 204
- US-A1- 2005 247 065
- US-B1- 6 314 716

## Description

La présente invention se rapporte au domaine technique des chambres de combustion pour moteurs à turbine à gaz tels que les turboréacteurs. Elle vise en particulier une chambre de diffusion comportant un carénage sur la chambre de combustion.

Dans tout ce qui suit, les termes « axial », « radial », « transversal » correspondent respectivement à une direction axiale, à une direction radiale, et à un plan transversal du turboréacteur, et les termes « amont » et « aval » correspondent respectivement au sens de l'écoulement des gaz dans le turboréacteur.

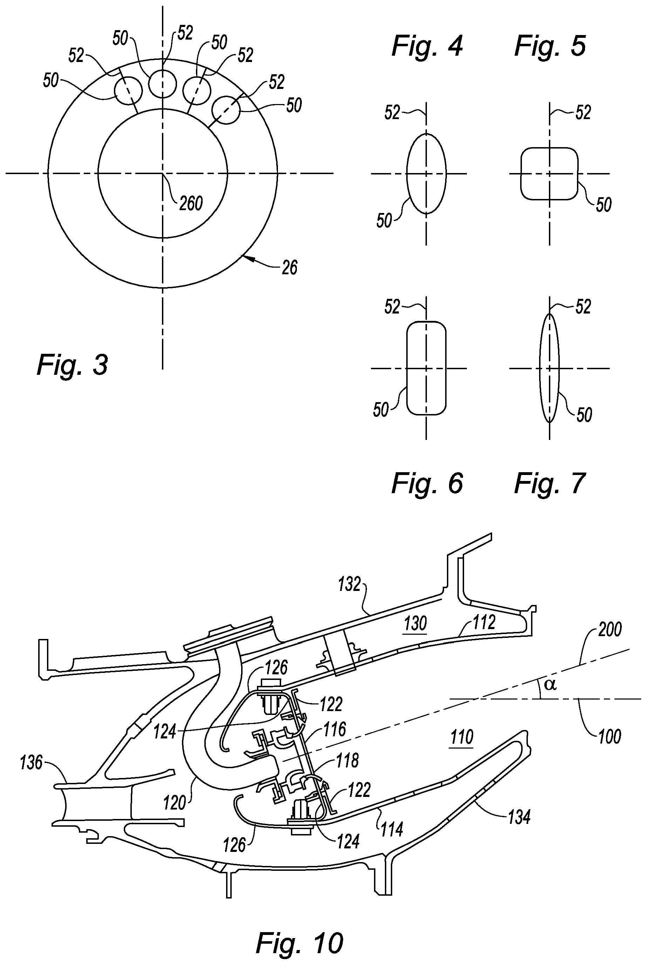

Une chambre de combustion conventionnelle, dite divergente, est illustrée sur la figure 10, qui est une coupe axiale montrant une moitié de la chambre de combustion, l'autre moitié de celle-ci se déduisant par symétrie par rapport à l'axe (non représenté) du moteur. La chambre de combustion 110 est comprise dans une chambre de diffusion 130 qui est un espace annulaire défini entre un carter externe 132 et un carter interne 134, dans lequel est introduit un comburant comprimé provenant en amont d'un compresseur (non représenté) par l'intermédiaire d'un conduit annulaire de diffusion 136.

Cette chambre de combustion conventionnelle dite divergente 110 comporte une paroi externe 112 et une paroi interne 114, qui sont coaxiales et sensiblement coniques, et qui s'évasent de l'amont vers l'aval avec un angle de cône α1. Les parois externe 112 et interne 114 de la chambre de combustion 110 sont reliées entre elles vers l'amont de la chambre de combustion par un fond de chambre 116.

Le fond de chambre 116 est doté de systèmes d'injection 118 à travers lesquelles passent des injecteurs 120 qui introduisent du carburant dans la chambre de combustion 110 où se déroulent les réactions de combustion.

Ces réactions de combustion ont pour effet de faire rayonner de la chaleur de l'aval vers l'amont en direction du fond de chambre 116. Afin d'éviter un endommagement de ce fond de chambre 116, dû à la chaleur, il est prévu des écrans de protection thermique encore appelés déflecteurs 122, disposés sur une face intérieure du fond de chambre 116. Ils sont refroidis au moyen de jets d'air de refroidissement pénétrant dans la chambre de combustion 110 à travers des orifices de refroidissement 124 percés dans le fond de chambre 116. Ces jets d'air, s'écoulant de l'amont vers l'aval, sont guidés par un carénage de chambre 126, traversent le fond de chambre 116 à travers les orifices de refroidissement 124, et viennent impacter une face amont des déflecteurs 122. Le carénage 126 sert aussi à canaliser l'air qui alimente les systèmes d'injection 118. Il a une forme sensiblement semi-torique et s'étend entre deux bords concentriques de fixation aux bords du fond de chambre 118. Une portion centrale du carénage 126 est ouverte pour laisser passer les tuyaux d'injection de carburant jusqu'aux injecteurs 120. Les ouvertures peuvent être une fente unique sensiblement circulaire. Dans ce cas, le carénage 126 est composé de deux flancs appelés casquettes. En alternative, les ouvertures peuvent consister en un ensemble de fenêtres menant chacune à un groupe d'injecteurs.

Dans des conceptions plus récentes de chambres de combustion dites convergentes, les parois externe et interne de la chambre de combustion sont inclinées en s'évasant de l'aval vers l'amont, et non pas de l'amont vers l'aval comme avec les chambres de combustion conventionnelles dites divergentes précédemment décrites.

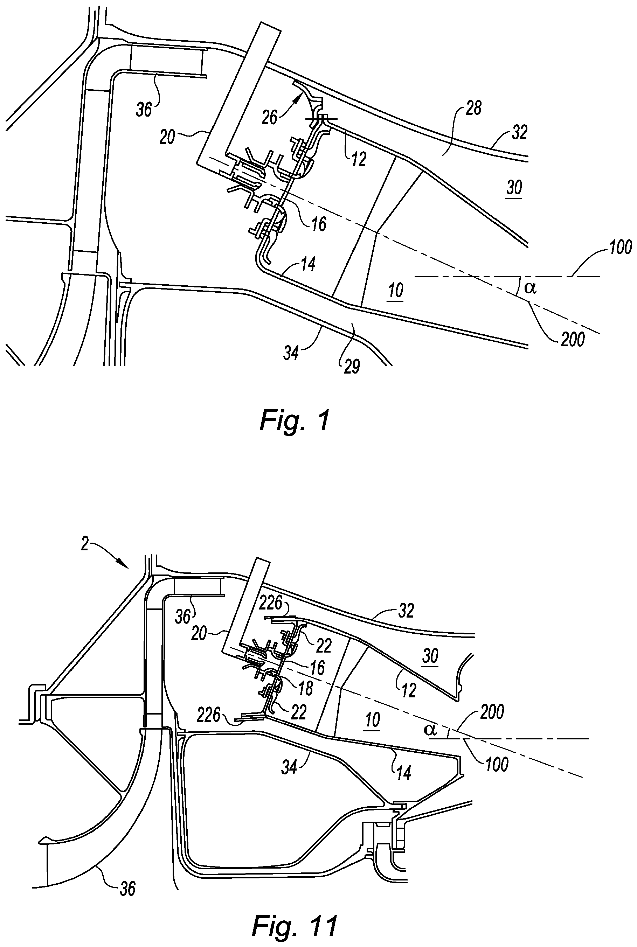

Une telle chambre de combustion dite convergente 10 est partiellement illustrée à la figure 11, en coupe axiale. Sur cette figure 10 apparaissent une direction axiale 100 parallèle à l'axe du turboréacteur, une direction génératrice 200 de la chambre de combustion 10, et un angle de cône α2 entre ces deux axes 100, 200. La chambre de combustion 10 comporte une paroi externe 12 et une paroi interne 14, qui sont coaxiales et sensiblement tronconiques, et qui s'évasent de l'aval vers l'amont avec un angle de cône α2.

Les parois externe 12 et interne 14 de la chambre de combustion 10 sont reliées entre elles vers l'amont de la chambre de combustion par un fond de chambre 16, qui est une pièce sensiblement tronconique s'étendant entre deux plans sensiblement transversaux en s'évasant de l'amont vers l'aval. Le fond de chambre 16 se raccorde à chacune des deux parois externe 12 et interne 14 de la chambre de combustion 10. Il est doté de systèmes d'injection 18 à travers lesquels passent des injecteurs 20 qui traversent le carter extérieur 32 et qui introduisent du carburant dans la chambre de combustion 10 où se déroulent les réactions de combustion.

La chambre de combustion 10 est comprise dans une chambre de diffusion 30 qui est un espace annulaire défini entre un carter externe 32 et un carter interne 34, dans lequel est introduit un comburant comprimé provenant en amont d'un compresseur centrifuge (non représenté) par l'intermédiaire d'un conduit annulaire de diffusion 36. Le comburant est généralement de l'air. La chambre de combustion 10 se trouve positionnée au sein de la chambre de diffusion 30 entre une partie externe 28 et une partie interne 29 de cette chambre de diffusion 30. La partie externe 28 de la chambre de diffusion 30 constitue un espace annulaire et conique compris entre le carter externe 32 et la paroi externe 12 de la chambre de combustion 10. La partie interne 29 de la chambre de diffusion 30 constitue un espace annulaire et conique compris entre le carter interne 34 et la paroi interne 14 de la chambre de combustion 10.

Une partie du comburant, généralement de l'air, pénètre dans la chambre de diffusion 30, puis dans la chambre de combustion 10 pour participer aux réactions de combustion qui s'y déroulent. L'entrée du comburant dans la chambre de combustion 10 est guidée par le carénage 226. Une autre partie du comburant s'écoule dans la chambre de diffusion 30 en contournant la chambre de combustion 10 d'une part dans une partie externe 28 de la chambre de diffusion 30, comprise entre le carter externe 32 et la paroi externe 12 de la chambre de combustion, et d'autre part dans une partie interne 29 de la chambre de diffusion 30, comprise entre le carter interne 14 et la paroi interne 34 de la chambre de combustion. Une telle chambre de combustion est connue par exemple du document US 2005/0247065 A1. Avec une telle configuration, il se crée un déséquilibre entre l'écoulement de contournement externe de la chambre de combustion 10, dans la partie externe 28 de la chambre de diffusion 30, et l'écoulement de contournement interne de cette même chambre de combustion 10, dans la partie interne 29 de la chambre de diffusion 30. Il s'ensuit que les pertes de charges disponibles à travers la paroi externe 12, qui correspondent à la différence de pression entre la partie externe 28 de la chambre de diffusion 30 et l'intérieur de la chambre de combustion 10, sont supérieures aux pertes de charges disponibles à travers la paroi interne 14, qui correspondent à la différence de pression entre la partie interne 29 de la chambre de diffusion 30 et l'intérieur de la chambre de combustion 10.

Ce déséquilibre des pertes de charges entre la paroi externe 12 et la paroi interne 14 est préjudiciable au bon fonctionnement de la chambre de combustion 10. En effet, la pénétration et la dilution des jets primaires est meilleure au niveau de la paroi externe 12 qu'au niveau de la paroi interne 14. En outre, du fait que les pertes de charge disponibles sont plus faibles à travers la paroi interne 14, celle-ci est plus difficile à refroidir.

Par ailleurs, les pertes de charges disponibles pour l'alimentation en air des systèmes d'injection 18 est réduite car le diffuseur 36 ne se trouve pas directement en face des systèmes d'injection 18.

L'invention se propose de remédier à ces inconvénients et propose une conception qui réduit notablement ce déséquilibre. Les problèmes de l'art antérieur sont résolus, selon la présente invention, par une chambre de diffusion avec les caractéristiques de la revendication 1. Des autres caractéristiques particulières sont divulguées dans les revendications dépendantes. L'invention sera mieux comprise à la lecture de la description détaillée qui va suivre, de modes de réalisation particuliers de l'invention, fournis à titre indicatif et nullement limitatif, et illustrés au moyen des dessins annexés, dans lesquels :
- la figure 1 est une vue en coupe axiale d'une partie de moteur à turbine à gaz ayant une chambre de combustion dite convergente, montrant une moitié de la chambre de combustion, et montrant une moitié d'un carénage selon l'invention, l'autre moitié se déduisant par symétrie axiale ;
- la figure 2 est une vue à plus grande échelle d'un détail de la figure 1, montrant un premier mode de réalisation du carénage selon l'invention ;
- la figure 3 représente un carénage selon l'invention, vu de l'amont selon la flèche III de la figure 2, et montrant des lumières du carénage selon l'invention ;
- les figures 4 à 7 représentent, de façon schématique, d'autre formes de lumières conformes à l'invention ;
- la figure 8 est une vue schématique d'un carénage selon un premier mode de réalisation, en coupe selon son axe ;
- la figure 9 est une vue analogue à la figure 8, pour un deuxième mode de réalisation du carénage ;
- la figure 10, déjà décrite, est une vue en coupe axiale d'une chambre de combustion dite divergente de la technique antérieure, dotée d'un carénage de la technique antérieure ; et
- la figure 11, déjà décrite, est une vue en coupe axiale d'une chambre de combustion dite convergente, dotée d'un autre carénage de la technique antérieure.

En se référant tout d'abord à la figure 1, il est représenté, en coupe axiale, une moitié d'une chambre de combustion, du type convergente. Cette chambre de combustion 10 est sensiblement similaire à celle de la technique antérieure, illustrée à la figure 11, et comporte une paroi externe 12 et une paroi interne 14, qui sont coaxiales et sensiblement tronconiques, et qui s'évasent de l'aval vers l'amont avec un angle de cône α2.

La chambre de combustion 10 est comprise dans une chambre de diffusion 30 qui est un espace annulaire défini entre un carter externe 32 et un carter interne 34, dans lequel débouche un conduit annulaire de diffusion 36. La chambre de diffusion 30 comporte une partie externe 28 délimitée entre le carter externe 32 et la paroi externe 12 de la chambre de combustion ainsi qu'une partie interne 29 délimitée entre le carter interne 34 et la paroi interne 14 de la chambre de combustion 10.

Les parois externe 12 et interne 14 sont reliées vers l'amont de la chambre de combustion par un fond de chambre 16, sensiblement similaire à celui de la figure 11, doté de systèmes d'injection 18 à travers lesquelles passent des injecteurs 20 qui traversent le carter extérieur 32.

Cette chambre de combustion 10 selon l'invention diffère de celle de la technique antérieure illustrée à la figure 11 par son carénage 26 et la liaison de ce carénage 26 avec le fond de chambre 16.

Comme illustré aux figures 1, 2, 8 et 9, le carénage 26 selon l'invention est une pièce annulaire de révolution autour d'un axe de carénage 260, qui est disposée entre le carter externe 32 et la chambre de combustion 10, de sorte qu'il obture la partie externe 28 de la chambre de diffusion 30. Il possède un corps de carénage 40 ayant une section sensiblement plane ainsi qu'une extrémité radialement externe 42 et une extrémité radialement interne 44. Le carénage 26 est doté d'un bord externe 46 s'étendant à partir de l'extrémité radialement externe 42 et d'un bord interne 48 s'étendant à partir de l'extrémité radialement interne 44.

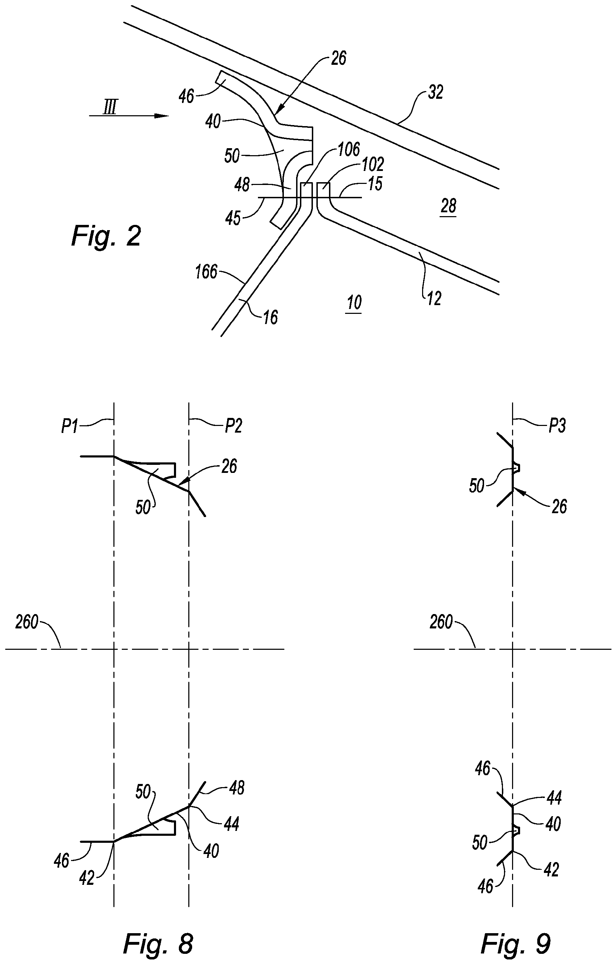

Selon le premier mode de réalisation illustré plus précisément à la figure 8, le corps 40 se présente sous la forme d'un tronc de cône compris entre deux plans P1 et P2 transversaux à l'axe de carénage 260. Lorsque le carénage 26 est en place dans la chambre de diffusion 30, le bord externe 46 du carénage 26 s'étend sensiblement vers l'amont de la chambre de diffusion 30, et son bord interne 48 s'étend sensiblement vers l'axe de carénage 260, qui est alors confondu avec l'axe du turboréacteur 100.

Selon le deuxième mode de réalisation illustré plus précisément à la figure 9, le corps 40 se présente sous la forme d'une portion de disque contenue dans un plan P3 transversal à l'axe de carénage 260. Lorsque le carénage 26 est en place dans la chambre de diffusion 30, le bord externe 46 et le bord interne 48 du carénage 26 s'étendent sensiblement vers l'amont de la chambre de diffusion 30. De plus, lorsque le carénage 26 est en service, l'axe de carénage 260 et l'axe du turboréacteur 100 sont confondus.

Selon le premier ou le deuxième modes de réalisation du carénage 26, la fixation de celui-ci est effectuée sur la chambre de combustion 10.

Comme illustré sur la figure 1, le fond de chambre 16 et la paroi externe 12 sont fixés l'un à l'autre de manière étanche. Sur l'exemple illustré aux figures 1 et 2, cette fixation est réalisée par une liaison vissée ou boulonnée 15 entre une bride 102 de la paroi externe 12 et une bride 106 du fond de chambre 16, ces deux brides s'étendant radialement vers l'extérieur. Ces brides peuvent être annulaires autour de l'axe du turboréacteur 110 (voir figures 1 et 2), ou tronconiques autour de ce même axe.

De préférence, le carénage 26 est fixé sur la chambre de combustion 10 par l'intermédiaire de moyens de fixation disposés sur son bord interne 48. Sur l'exemple illustré aux figures 1 et 2, ces moyens de fixation comportent des trous (non visibles aux figures) et des vis et/ou boulons 45 traversant ces trous et venant se fixer sur une paroi de la chambre de combustion. De préférence, le carénage 26 est fixé sur une face amont 166 du fond de chambre 16. Sur l'exemple illustré, lesdits vis et/ou boulons 45 sont confondus avec la liaison vissée ou boulonnée 15 décrite précédemment, la fixation se faisant à la jonction de la paroi externe 12 de la chambre de combustion 10 et du fond de chambre 16. Les trous et les vis et/ou boulons 45 sont par exemple répartis sur la périphérie du bord interne 48 du carénage 26. De manière analogue, les brides de fixation 102 et 106 sont dotées de trous de fixation régulièrement répartis sur leur périphérie.

Selon l'invention, le bord externe 46 du carénage 26 n'est pas fixé, mais repose en appui contre une face intérieure du carter externe 32 délimitant la chambre de diffusion 30. Une telle liaison non fixée présente l'avantage d'autoriser un glissement relatif du carénage 26 par rapport audit carter externe 32, suivant une direction sensiblement parallèle à l'axe du turboréacteur 100. Du fait de l'orientation de ce bord externe 46 par rapport au corps 40 du carénage 26 (voir figure 2), la liaison entre ledit carénage 26 et ledit carter externe 32 est une liaison étanche ou quasi-étanche, au jeu de translation près.

Comme illustré sur la figure 3 qui est une vue de l'amont du corps 40 du carénage 26, le carénage 26 selon le premier mode ou le deuxième mode de réalisation est de préférence doté d'au moins une lumière 50 traversant ledit corps 40. Il en résulte que l'obturation de la partie externe 28 de la chambre de diffusion 30 par ledit carénage 26 n'est pas totalement hermétique, mais laisse au contraire passer du comburant, qui est de l'air.

En pratique le carénage 26 comporte une pluralité de lumières 50 qui sont disposées sur son corps 40 et réparties circonférentiellement sur celui-ci. Par exemple, les lumières 50 sont en nombre identique au nombre de systèmes d'injection traversant le fond de chambre 16, et se trouvent sur des prolongements des axes d'injection 52 correspondants. Selon une forme de réalisation particulière, lesdites lumières 50 sont des lumières 50 à bord tombé, le bord de chaque lumière 50 s'étendant vers l'aval du turboréacteur 2 lorsque le carénage 26 est installé dans ledit turboréacteur 2. Des lumières à bord tombé permettent de mieux canaliser l'écoulement que des lumières sans bord tombé.

Les formes et les dimensions des lumières 50 sont déterminées en fonction du débit de comburant que l'on souhaite laisser passer à travers lesdites lumières 50. Par souci de simplicité du processus de fabrication d'un tel carénage 26, les lumières 50 peuvent être choisies identiques les unes aux autres sur un même corps 40 de carénage 26. Sur l'exemple illustré à la figure 3, lesdites lumières 50 sont sensiblement circulaires. Selon d'autres formes de réalisation, lesdites lumières sont sensiblement ovales ou elliptiques (figure 4) ou sensiblement carrées (figure 5) ou sensiblement rectangulaires (figure 6) ou même en forme de fente (figure 7). D'autres formes peuvent bien sûr être choisies.

Ainsi, la présence des lumières 50, leur(s) forme(s) et leurs dimensions permettent de calibrer les pertes de charges relatives à l'écoulement d'air de contournement de la chambre de combustion 10 qui passe par la partie externe 28 de la chambre de diffusion. Il est ainsi possible d'équilibrer les pertes de charge de cet écoulement d'air de contournement externe avec les pertes de charge de l'écoulement de contournement interne qui passe par la partie interne 29 de la chambre de diffusion, et qui sert à alimenter les systèmes d'injection 18 et la paroi interne 14 de la chambre de combustion 10.

Un avantage de l'invention réside dans le fait que l'écoulement d'air de contournement interne de la chambre de combustion 10 est amélioré par la forme du carénage 26. En effet, l'air de contournement interne est guidé en direction des systèmes d'injection 18 et de la partie interne 29 de la chambre de diffusion 30 par la toile située entre les lumières 50 du carénage 26.

## Revendications

1. Chambre de diffusion (30) de moteur à turbine à gaz définie entre un carter externe (32) et un carter interne (34) dudit moteur, alimentée en air par un conduit annulaire de diffusion (36) amont, comprenant une chambre de combustion (10) de type convergent, ménageant un canal annulaire externe (28) avec le carter externe (32) et un canal annulaire interne (29) avec le carter interne (34), ladite chambre de combustion (10) étant positionnée dans la chambre de diffusion (30) de façon à répartir entre lesdits canaux annulaires externe (28) et interne (29) au moins une partie de l'air s'écoulant de ladite chambre de diffusion (30) pour pénétrer dans la chambre de combustion, (10) **caractérisée par le fait qu'**elle comporte un carénage (26) disposé entre le carter externe (32) et la chambre de combustion (10) et obturant partiellement le canal annulaire externe (28), le carénage (26) comprenant un corps (40) se présentant sensiblement sous la forme d'une pièce de révolution autour d'un axe de carénage (260), le corps (40) présentant une section sensiblement plane et possédant une extrémité radialement externe (42) et une extrémité radialement interne (44), le carénage (26) comportant un bord externe (46) s'étendant à partir de l'extrémité radialement externe (42) et un bord interne (48) s'étendant à partir de l'extrémité radialement interne (44), le bord externe (46) reposant en appui contre une face intérieure du carter externe (32).

2. Chambre de diffusion (30) selon la revendication 1 dont le carénage est disposé du côté du fond de la chambre de combustion.

3. Chambre de diffusion (30) selon l'une des revendications précédentes dont ledit corps (40) s'étend entre deux plans (P1, P2 ; P3, P3) sensiblement transversaux audit axe de carénage (260).

4. Chambre de diffusion (30) selon la revendication 3 dont lesdits deux plans (P3, P3) sont confondus, et ledit corps (40) est une portion annulaire de disque.

5. Chambre de diffusion (30) selon la revendication 3 dont lesdits deux plans (P1, P2) sont distincts l'un de l'autre, et ledit corps (40) est tronconique en s'évasant de l'aval vers l'amont.

6. Chambre de diffusion (30) selon l'une quelconque des revendications 3 à 5, dont le carénage (26) comporte au moins une lumière (50) ménagée dans ledit corps (40).

7. Chambre de diffusion (30) selon la revendication 6 dont ladite lumière (50) est à bord tombé.

8. Chambre de diffusion (30) selon l'une quelconque des revendications 3 à 7, dont le carénage (26) comporte, en outre, des moyens de fixation (45) pour sa fixation sur la chambre de combustion (10).

9. Chambre de diffusion (30) selon la revendication 8, dont lesdits moyens de fixation (45) sont disposés sur le bord interne (48).

10. Chambre de diffusion (30) selon l'une des revendications 1 à 9, **caractérisée en ce qu'**elle comprend une chambre de combustion (10), la chambre de combustion (10) comportant une paroi externe (12), une paroi interne (14) et un fond de chambre (16) reliant lesdites parois (12, 14), dont le carénage (26) est fixé sur le fond de chambre (16).

11. Chambre de diffusion (30) selon la revendication 10, dont le carénage (26) est fixé à la chambre de combustion (10) vers la liaison dudit fond de chambre (16) avec ladite paroi externe (12).

12. Chambre de diffusion (30) selon la revendication 10, le carénage (26) comportant un bord interne (48) s'étendant à partir d'une extrémité radialement interne (44) du corps du carénage (26), dont ledit bord interne (48) est fixé sur une face amont (166) du fond de chambre (16).

13. Moteur à turbine à gaz, comportant une chambre de diffusion selon l'une des revendications 1 à 12.

## Patentansprüche

1. Diffusionskammer (30) eines Gasturbinenmotors, die durch ein Außengehäuse (32) und einen Innengehäuse (34) des Motors definiert wird, durch eine stromaufwärts liegende ringförmige Diffusionsleitung (36) mit Luft versorgt wird, umfassend eine Verbrennungskammer (10) konvergierender Art, einen äußeren ringförmigen Kanal (28) mit dem Außengehäuse (32) und einem inneren ringförmigen Kanal (29) mit dem Innengehäuse (34) ausbildend, wobei die Verbrennungskammer (10) dergestalt in der Diffusionskammer (30) positioniert ist, dass sie zwischen dem äußeren (28) und dem inneren (29) ringförmigen Kanal mindestens einen Teil der Luft aufteilt, die aus der Diffusionskammer (30) ausströmt, um in die Verbrennungskammer (10) einzudringen,
**dadurch gekennzeichnet, dass** sie eine Leitverkleidung (26) umfasst, die zwischen dem Außengehäuse (32) und der Verbrennungskammer (10) angeordnet ist und den äußeren ringförmigen Kanal (28) teilweise verschließt, wobei die Leitverkleidung (26) einen Körper (40) aufweist, der sich im Wesentlichen in Form eines Rotationsteils um eine Achse der Leitverkleidung (260) darstellt, wobei der Körper (40) einen im Wesentlichen ebenen Abschnitt aufweist und ein radial äußeres Ende (42) und ein radial inneres Ende (44) besitzt, wobei die Leitverkleidung (26) einen äußeren Rand (46), der sich ausgehend von dem radial äußeren Ende (42) erstreckt, und einen inneren Rand (48) umfasst, der sich ausgehend von dem radial inneren Ende (44) erstreckt, wobei der äußere Rand (46) gegen eine Innenseite des Außengehäuses (32) anliegt.

2. Diffusionskammer (30) nach Anspruch 1, wobei die Leitverkleidung auf der Seite des Bodens der Verbrennungskammer angeordnet ist.

3. Diffusionskammer (30) nach einem der vorhergehenden Ansprüche, wobei sich der Körper (40) zwischen zwei Ebenen (P1, P2 ; P3, P3) im Wesentlichen quer zu der Achse der Leitverkleidung (260) erstreckt.

4. Diffusionskammer (30) nach Anspruch 3, wobei die beiden Ebenen (P3, P3) zusammenfallen, und es sich bei dem Körper (40) um einen ringförmigen Abschnitt einer Scheibe handelt.

5. Diffusionskammer (30) nach Anspruch 3, wobei sich die beiden Ebenen (P1, P2) voneinander unterscheiden, und der Körper (40) kegelstumpfförmig ist, indem er sich von stromabwärts nach stromaufwärts verjüngt.

6. Diffusionskammer (30) nach irgendeinem der Ansprüche 3 bis 5, wobei die Leitverkleidung (26) mindestens eine Öffnung (50) umfasst, die in dem Körper (40) ausgebildet ist.

7. Diffusionskammer (30) nach Anspruch 6, wobei die Öffnung (50) einen gewölbten Rand hat.

8. Diffusionskammer (30) nach irgendeinem der Ansprüche 3 bis 7, wobei die Leitverkleidung (26) außerdem Befestigungsmittel (45) zu ihrer Befestigung an der Verbrennungskammer (10) umfasst.

9. Diffusionskammer (30) nach Anspruch 8, wobei die Befestigungsmittel (45) auf dem inneren Rand (48) angeordnet sind.

10. Diffusionskammer (30) nach irgendeinem der Ansprüche 1 bis 9, **dadurch gekennzeichnet, dass** sie eine Verbrennungskammer (10) aufweist, wobei die Verbrennungskammer (10) eine äußere Wand (12), eine innere Wand (14) und einen Kammerboden (16) umfasst, der die Wände (12, 14) verbindet, wobei die Leitverkleidung (26) an dem Kammerboden (16) befestigt ist.

11. Diffusionskammer (30) nach Anspruch 10, wobei die Leitverkleidung (26) an der Verbrennungskammer (10) in Richtung der Verbindung des Kammerbodens (16) mit der äußeren Wand (12) befestigt ist.

12. Diffusionskammer (30) nach Anspruch 10, wobei die Leitverkleidung (26) einen inneren Rand (48) umfasst, der sich ausgehend von einem radial inneren Ende (44) des Körpers der Leitverkleidung (26) erstreckt, wobei der innere Rand (48) an einer Seite stromaufwärts (166) des Kammerbodens (16) befestigt ist.

13. Gasturbinenmotor, eine Diffusionskammer nach einem der Ansprüche 1 bis 12 umfassend.

## Claims

1. Gas turbine engine diffuser (30) defined between an external casing (32) and an internal casing (34) of said engine and supplied with air via an upstream annular diffuser duct (36), comprising a combustion chamber (10) of the convergent type, forming an external annular duct (28) with the external casing (32) and an internal annular duct (29) with the internal casing (34), said combustion chamber (10) being positioned in the diffuser (30) so as to distribute between said external (28) and internal (29) annular ducts at least a portion of the air flowing from said diffuser (30) to enter the combustion chamber (10), **characterised in that** it comprises a cowling (26) arranged between the external casing (32) and the combustion chamber (10) and partially closing off the external annular duct (28), the cowling (26) comprising a body (40) substantially in the form of a part exhibiting symmetry of revolution about a cowling axis (260), the body (40) having a substantially flat cross section and having a radially external end (42) and a radially internal end (44), the cowling (26) comprising an external edge (46) extending from said radially external end (42) and an internal edge (48) extending from said radially internal end (44), the external edge (46) bearing against an internal face of the external casing (32).

2. Diffuser (30) according to claim 1, wherein the cowling is positioned towards the closed end of the combustion chamber.

3. Diffuser (30) according to one of the preceding claims wherein said body (40) extends between two planes (P1, P2; P3, P3) which are substantially transverse with respect to said cowling axis (260).

4. Diffuser (30) according to claim 3, wherein said two planes (P3, P3) coincide, and said body (40) is an annular portion of a disk.

5. Diffuser (30) according to claim 3, wherein said two planes (P1, P2) are distinct from one another, and said body (40) is frustoconical, widening in the direction from downstream to upstream.

6. Diffuser (30) according to any one of claims 3 to 5, wherein the cowling (26) comprises at least one aperture (50) formed in said body (40).

7. Diffuser (30) according to claim 6, wherein said aperture (50) has turned-down edges.

8. Diffuser (30) according to any one of claims 3 to 7, wherein the cowling (26) further comprises fixing means (45) for fixing it to the combustion chamber (10).

9. Diffuser (30) according to claim 8, wherein said fixing means (45) are positioned on the internal edge (48).

10. Diffuser (30) according to one of claims 1 to 9, **characterised in that** it comprises a combustion chamber (10), the combustion chamber (10) comprising an external wall (12), an internal wall (14) and a chamber end wall (16) connecting the aforesaid two walls (12, 14), wherein the cowling (26) is fixed to the chamber end wall (16).

11. Diffuser (30) according to claim 10, wherein the cowling (26) is fixed to the combustion chamber (10) towards the connection between said chamber end wall (16) and said external wall (12).

12. Diffuser (30) according to claim 10, the cowling (26) comprising an internal edge (48) extending from a radially internal end (44) of the body of the cowling (26), wherein said internal edge (48) is fixed to an upstream face (166) of the chamber end wall (16).

13. Gas turbine engine, comprising a diffuser according to one of claims 1 to 12.
